# EUROPÄISCHE PATENTSCHRIFT

(11) **EP 3 016 771 B1**
(45) Veröffentlichungstag und Bekanntmachung des Hinweises auf die Patenterteilung: **13.11.2019**
(21) Anmeldenummer: 14727535.8
(22) Anmeldetag: 03.06.2014
(51) Int. Cl.: B24B 39/02, B24B 39/04

(54) **VORRICHTUNG ZUM GLÄTTEN EINER VERZAHNUNG UND VERFAHREN ZUR HERSTELLUNG EINER VERZAHNUNG**
APPARATUS FOR SMOOTHING A TOOTHING SYSTEM AND PRODUCTION PROCESS FOR A TOOTHING SYSTEM
DISPOSITIF PERMETTANT DE LISSER UNE DENTURE ET PROCÉDÉ DE PRODUCTION D'UNE DENTURE

(30) Priorität: 04.07.2013 DE 102013213056; 20.02.2014 DE 102014203088
(43) Veröffentlichungstag der Anmeldung: 11.05.2016
(73) Patentinhaber: ZF Friedrichshafen AG, 88046 Friedrichshafen (DE)
(72) Erfinder: RANK, Bernhard, 66386 St. Ingbert (DE); BUCK, Jan-Michael, 88048 Friedrichshafen (DE); HILPERT, Heinz-Guenther, F-57515 Alsting (FR)
(86) Internationale Anmeldenummer: PCT/EP2014/061414
(87) Internationale Veröffentlichungsnummer: WO 2015/000652

(56) Entgegenhaltungen:
- EP-A2- 0 366 074
- US-A- 4 309 802

## Beschreibung

Die Erfindung betrifft eine Vorrichtung zum Glätten einer Innen- und/oder einer Außenverzahnung nach dem Oberbegriff des Patentanspruches 1 sowie ein Verfahren zur Herstellung einer Innen- und/oder Außenverzahnung nach dem Oberbegriff des Patentanspruches 15.

Es ist bekannt, dass die Innenverzahnungen von Hohlrädern zunächst durch Räumen, bei Schrägverzahnungen durch so genanntes Drallräumen spanabhebend hergestellt werden. Durch den Räumvorgang entstehen auf der Oberfläche der Zahnflanken spitzkämmige Strukturen, welche zu einer nicht erwünschten Oberflächenrauhigkeit auf den Zahnflanken führen. Eine zu hohe Oberflächenrauhigkeit ist eine der Ursachen für die so genannte Graufleckigkeit oder Grübchenbildung, welche sich beim Betrieb der Zahnräder auf den Zahnflanken ausbildet. Es ist auch bekannt, dass man die durch spanabhebende Bearbeitung erzeugte Oberflächenrauhigkeit durch Glätten reduzieren kann. Bei diesem Glättverfahren werden die Profilspitzen der rauen Oberfläche durch Umformung eingeebnet. Dadurch können die Oberflächengüte der Zahnflanken verbessert und eine Ursache für das Auftreten von Graufleckigkeit vermieden werden.

Durch die DE 199 63 477 A1 wurde eine Vorrichtung zum Glätten einer Innenverzahnung eines Hohlrades bekannt. Die Vorrichtung umfasst drei um 90° gegeneinander versetzte Bearbeitungseinheiten, die jeweils ein Glättzahnrad aufweisen. Das Hohlrad wird in eine Halterung eingespannt und auf einem Drehtisch taktweise jeweils um 90° verschwenkt, sodass es die drei Bearbeitungsstationen durchläuft. Die Glättzahnräder werden auf jeder der drei Bearbeitungsstationen in Eingriff mit der Innenverzahnung des Hohlrades gebracht und bewirken somit sukzessive, d. h. in drei zeitlich und räumlich aufeinander folgenden Schritten eine Glättung der Innenverzahnung. Das Glättzahnrad wird jeweils radial von innen nach außen zugestellt, wofür eine Anpresskraft durch Tellerfedern aufgebracht wird. Die Glättzahnräder werden jeweils durch einen Motor angetrieben und wälzen sich an der Innenverzahnung ab und werden dabei gleichzeitig in axialer Richtung oszilliert. Die drei Glättzahnräder der verschiedenen Bearbeitungsstationen sind auf verschiedene Abschnitte der Zahnflanken gerichtet.

Es ist auch bekannt, z. B. durch die DE 10 2007 039 959 A1, eine Außenverzahnung eines Zahnrades durch zwei diametral angeordnete Rundwalzwerkzeuge glatt zu walzen.

Die EP 0 366 074 A2 offenbart den Oberbegriff der Ansprüche 1 und 15.

Es ist Aufgabe der vorliegenden Erfindung, eine Vorrichtung der eingangs genannten Art zu verbessern und zu vereinfachen sowie ein vorzugsweise mit der Vorrichtung durchführbares Verfahren vorzuschlagen.

Die Aufgabe der Erfindung wird durch die Merkmale der unabhängigen Patentansprüche 1 und 15 gelöst. Vorteilhafte Ausgestaltungen ergeben sich aus den Unteransprüchen.

Nach einem ersten Aspekt der Erfindung umfasst die Vorrichtung mindestens zwei in die Innen- und/oder die Außenverzahnung eingreifende, radial zustellbare Glättzahnräder, welche innerhalb und/oder außerhalb des Bauteiles angeordnet sind. Die Glättzahnräder sind somit nicht auf verschiedenen, sondern in einer einzigen Bearbeitungsstation zum Glätten der Innen- und/oder Außenverzahnung angeordnet. Damit wird die Vorrichtung erheblich einfacher und kompakter. Die Anpress- oder Zustellkräfte sind erheblich geringer als beim Stand der Technik.

Erfindungswesentlich ist, dass das zu bearbeitende Bauteil beim Glätten nicht fest in die Vorrichtung eingespannt ist, sondern beim Glätten nur lose auf einer Auflage aufliegt. Erfindungswesentlich ist auch, dass an zumindest einem - vorzugsweise an jedem - der Glättzahnräder ein Anlaufring vorgesehen ist, der beim Glätten auftretende axiale Bewegungen des Bauteils begrenzt.

In vorteilhafter Weise erlaubt diese Ausführungsform das Ineingriffbringen der Glättzahnräder (Werkzeuge) mit dem zu bearbeitenden Bauteil (Werkstück) unter geringem Axialspiel von wenigen Zehntelmillimetern. Die pendelnd gelagerten Glättzahnräder gleichen die dann sehr geringe Schrägstellung des zu bearbeitenden Bauteils aus, die beim axialen Abheben des Bauteils von der Auflage entstehen kann.

In einer bevorzugten Ausgestaltung ist der zur Begrenzung der Axialbewegung des nicht fest eingespannten Bauteils vorgesehene Anlaufring aus gehärtetem Stahl hergestellt und fest mit dem Glättzahnrad verbunden.

Nach einer bevorzugten Ausführungsform sind jeweils drei um 120° gegeneinander versetzte Glättzahnräder innerhalb und/oder außerhalb des Bauteiles angeordnet. Die Glättzahnräder sind somit wie Planetenräder in einem Planetengetriebe, d. h. innerhalb eines Hohlrades und/oder außerhalb eines Sonnenrades angeordnet und greifen gleichzeitig in die Innenverzahnung und/oder die Außenverzahnung ein.

Nach einer weiteren bevorzugten Ausführungsform ist mindestens ein Glättzahnrad auf einem radial beweglichen Schlitten angeordnet. Damit kann das mindestens eine Glättzahnrad radial auf die Innenverzahnung und/oder die Außenverzahnung des Bauteiles zugestellt werden.

Nach einer weiteren bevorzugten Ausführungsform sind ein erstes Glättzahnrad auf einem ersten Schlitten und ein zweites sowie ein drittes Glättzahnrad auf einem zweiten Schlitten angeordnet, wobei beide Schlitten diametral gegeneinander verschiebbar sind. Alternativ können auch drei innere und drei äußere Glättzahnräder auf beiden Schlitten angeordnet werden. Die beiden Schlitten werden vorzugsweise durch eine zentral angeordnete Verstelleinheit, z. B. einen Pneumatikzylinder nach innen und/oder außen verschoben, sodass die Glättzahnräder in Eingriff mit der Innen- und/oder Außenverzahnung des Werkstückes gebracht werden können. Es ist somit nur eine Verstelleinheit für die drei bzw. sechs Glättzahnräder erforderlich.

Nach einer weiteren bevorzugten Ausführungsform sind das zweite und das dritte Glättzahnrad drehbar gelagert, wobei die Drehachsen pendelnd gegenüber dem zweiten Schlitten angeordnet sind. Dadurch können beide Glättzahnräder während des Glättens den Schrägungswinkelabweichungen der Innenverzahnung des Hohlrades folgen. Somit ist eine ständige gleichmäßige Andrückkraft zwischen den Glätträdern und der Innenverzahnung gegeben.

Nach einer weiteren bevorzugten Ausführungsform ist das erste Glättzahnrad ebenfalls drehbar gelagert und in Drehrichtung angetrieben. Die Drehachse des antreibenden Glättzahnrades ist nicht pendelnd gelagert. Damit wird das Hohlrad durch das erste Glättzahnrad angetrieben, d. h. in Rotation versetzt, so dass sich alle Glättzahnräder an der Innenverzahnung abwälzen. Das Hohlrad, d. h. das Werkstück wird somit durch die Glättzahnräder zentriert und bedarf keiner gesonderten Aufnahme oder Einspannung.

Nach einer weiteren bevorzugten Ausführungsform weisen die drei bzw. sechs (drei innere und drei äußere) Glättzahnräder Verzahnungen mit unterschiedlich korrigierten Zahnprofilen auf. Durch die unterschiedlichen Zahnprofile werden unterschiedliche Partien oder Zonen der Zahnflanken - in Profilrichtung der Innenverzahnung gesehen - nacheinander bearbeitet. Damit erfolgt eine Glättung des gesamten Zahnprofils der Innenverzahnung und/oder gegebenenfalls auch der Außenverzahnung auf einer einzigen Bearbeitungsstation - gegenüber dem Stand der Technik entfallen somit zwei Bearbeitungsstationen.

Nach einer weiteren bevorzugten Ausführungsform weisen die Zahnflanken des ersten Glättzahnrades eine Höhenballigkeit auf; als höhenballig wird ein Profil bezeichnet, das mit ausgeprägter Kopf- und Fußrücknahme konvex verändert ist. Durch die Höhenballigkeit des ersten Glättzahnrades werden insbesondere die Flankenabschnitte in Teilkreisnähe der Innenverzahnung geglättet.

Nach einer weiteren bevorzugten Ausführungsform weist das Zahnprofil des zweiten Glättzahnrades eine Fußrücknahme auf, durch die insbesondere der Fußbereich der Innenverzahnung geglättet wird.

Nach einer weiteren bevorzugten Ausführungsform weist das Zahnprofil des dritten Glättzahnrades eine Kopfrücknahme auf, durch die insbesondere der Zahnkopf der Innenverzahnung bearbeitet werden kann.

Nach einer weiteren bevorzugten Ausführungsform ist das Bauteil als Hohlrad mit einer Innenverzahnung oder als so genanntes Sonnen-Hohlrad mit einer Innen- und Außenverzahnung ausgebildet. Bei der zweiten Alternative wirkt das Bauteil einerseits als Hohlrad und andererseits als Sonnenrad (mit einer Außenverzahnung). In diesem Falle werden die Glättzahnräder sowohl innerhalb des Sonnen-Hohlrades als auch außerhalb des Sonnen-Hohlrades angeordnet, sodass gleichzeitig oder nacheinander ein zweifacher Glättungsprozess erfolgt, nämlich einmal für die Innenverzahnung und einmal für die Außenverzahnung.

Nach einem weiteren Aspekt der Erfindung wird bei einem Verfahren zur Herstellung einer Innen- und/oder Außenverzahnung die Innen- und/oder die Außenverzahnung in einem ersten Verfahrensschritt durch ein spangebendes Verfahren, zum Beispiel Räumen, Stoßen oder Fräsen, vorgefertigt und in einem zweiten unmittelbar an den ersten anschließenden Verfahrensschritt durch Weichglätten, d. h. einen Umformprozess bearbeitet. Unmittelbar anschließend heißt hier, dass das Material im "weichen", d. h. im noch nicht oberflächengehärteten Zustand umgeformt wird. Vorteilhaft hierbei ist, dass relativ geringe Umformkräfte benötigt werden und die Makrogeometrie daher nicht verändert wird. Durch die Kombination dieser beiden Verfahrensschritte, nämlich eine erste spanabhebende Bearbeitung und eine zweite umformende Bearbeitung wird eine relativ hohe Oberflächengüte mit einem geringen verfahrenstechnischen Aufwand erreicht. Die erzielte Oberflächengüte trägt mit dazu bei, dass eine Graufleckigkeit, d. h. ein vorzeitiger Verschleiß beim Betrieb der im Eingriff stehenden Planetenräder vermieden wird.

Beim Weichglätten kommt dabei eine Vorrichtung zum Einsatz, bei der das zu bearbeitende Werkstück nicht fest in die Vorrichtung eingespannt ist, sondern beim Glätten lose auf einer Auflage aufliegt. Zumindest eines - vorzugsweise jedes - der Werkzeuge (Glättzahnräder) der Vorrichtung weist einen Anlaufring auf, der die beim Glätten aufgrund der herrschenden Radialkräfte entstehenden axiale Bewegungen des Werkstücks begrenzen.

Nach einer bevorzugten Verfahrensvariante wird der Vorgang des Weichglättens auf verschiedene Zonen des Zahnprofils aufgeteilt, wobei die Zonen aneinander angrenzen und ggf. überlappen. Vorzugsweise werden drei Zonen, die Flankenbereiche in Zahnhöhenmitte, die Flankenbereiche nahe Zahnkopf und nahe Zahnfuß separat, zeitgleich (synchron) geglättet. Bei ausreichenden Platzverhältnissen kann die Anzahl der Bearbeitungszonen über 3 hinaus gesteigert werden. Daraus ergibt sich der Vorteil einer kürzeren Bearbeitungsdauer.

Nach einer weiteren bevorzugten Variante wird das erfindungsgemäße Verfahren zum Weichglätten vorteilhaft auf der erfindungsgemäßen Vorrichtung durchgeführt.

Insbesondere bei Hohlrädern mit schräger Innenverzahnung und auch bei Stirnrädern mit schräger Außenverzahnung tritt infolge der beschriebenen radialen Anpresskraft eine Axialkraft auf, die das nicht fest eingespannte Werkstück gegebenenfalls von seiner Auflage abzuheben versucht und somit außer Eingriff bringen würde. Um diesem Effekt entgegenzuwirken und das Bearbeitungsergebnis zu verbessern, kann bei dem Verfahren vorgesehen sein, dass die Drehrichtung bei schrägverzahnten Werkstücken nach einer 360°-Umdrehung des zu glättenden Bauteils gewechselt wird.

Ausführungsbeispiele der Erfindung sind in der Zeichnung dargestellt und werden im Folgenden näher beschrieben, wobei sich aus der Beschreibung und/oder der Zeichnung weitere Merkmale und/oder Vorteile ergeben können. Es zeigen
- Fig. 1: eine schematische Darstellung einer erfindungsgemäßen Vorrichtung zum Glätten einer Innenverzahnung;
- Fig.1B: ein Detail der erfindungsgemäßen Vorrichtung gemäß Fig. 1; und
- Fig. 2: eine weitere erfindungsgemäße Vorrichtung zum Glätten einer Innen- und einer Außenverzahnung.

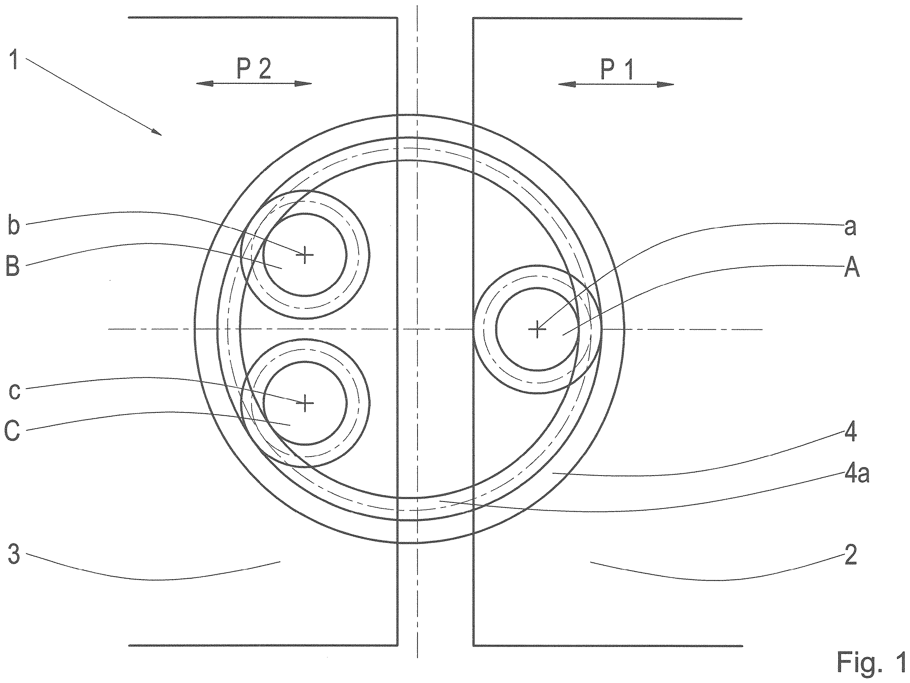

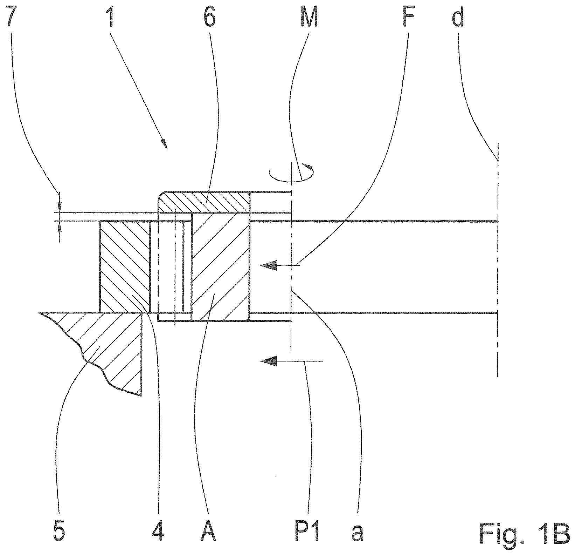

Fig. 1 zeigt ein erstes Ausführungsbeispiel der Erfindung, nämlich eine schematisch in einer Ansicht von oben dargestellte Vorrichtung 1 zum Glätten einer Innenverzahnung. Die Vorrichtung 1 umfasst einen ersten in Richtung eines Pfeils P1 beweglichen Werkzeugschlitten 2, kurz Schlitten 2 genannt, sowie einen zweiten in Richtung eines Pfeils P2 beweglichen Werkzeugschlitten 3, kurz Schlitten 3 genannt. Auf dem ersten Schlitten 2 ist ein erstes Glättzahnrad A, im Folgenden kurz Glättrad A genannt, um eine senkrecht zur Zeichenebene angeordnete Drehachse a gelagert. Auf dem zweiten Schlitten 3 sind ein zweites Glättzahnrad B um eine Drehachse b sowie ein drittes Glättzahnrad C um eine Drehachse c drehbar angeordnet. Die Glättzahnräder A, B, C sind Werkzeuge der Vorrichtung 1 und weisen auf ihrem Umfang eine gehärtete Evolventenverzahnung (ohne Bezugszahl) auf. Das erste Glättzahnrad A, dessen Drehachse a starr angeordnet ist, wird durch einen nicht dargestellten Motor angetrieben. Die Drehachsen b, c des zweiten und dritten Glättzahnrades B, C sind pendelnd angeordnet, d. h. sie können dem Verlauf der Zahnlücke folgen. Oberhalb der beiden Schlitten 2, 3 ist ein als Hohlrad 4 ausgebildetes Bauteil, das Werkstück, angeordnet, welches frei auf einer nicht dargestellten Platte liegt. Das Hohlrad 4 weist eine als Evolventenverzahnung ausgebildete Innenverzahnung auf, welche spangebend durch Räumen hergestellt ist. Vorzugsweise ist die Innenverzahnung 4a als Schrägverzahnung ausgebildet, welche durch so genanntes Drallräumen, d. h. durch eine schraubenförmige Bewegung des Räumwerkzeuges hergestellt wird. Die Glättzahnräder A, B, C sind innerhalb des Hohlrades 4 ähnlich wie Planetenräder in einem Planetengetriebe angeordnet, greifen mit ihren Außenverzahnungen in die Innenverzahnung 4a des Hohlrades 4 ein und bewirken damit auch eine Zentrierung des frei aufliegenden Hohlrades 4. Zwischen dem ersten Schlitten 2 und dem zweiten Schlitten 3 ist eine nicht dargestellte Verstelleinrichtung, vorzugsweise ein Pneumatikzylinder angeordnet, welcher die beiden Schlitten 2, 3 auseinander rückt, um somit die erforderliche Anpresskraft zwischen den Glättzahnrädern A, B, C und der Innenverzahnung 4a aufzubringen.

Der Prozess des Glättens ist ein Weichglätten und läuft folgendermaßen ab: Das Hohlrad 4 wird unmittelbar nach dem Räumvorgang, d. h. im "weichen" (nicht oberflächengehärteten) Zustand auf die Vorrichtung 1 aufgesetzt. Dabei befinden sich die Glättzahnräder A, B, C noch in ihrer zurückgezogenen Position, d. h. nicht in Eingriff mit der Innenverzahnung 4a - die Schlitten 2, 3 sind noch zusammengefahren. Nachdem das Hohlrad 4 auf der Vorrichtung 1 positioniert ist, werden die Glättzahnräder A, B, C durch Auseinanderfahren der Schlitten 2, 3 in Eingriff mit der Innenverzahnung 4a gebracht, wobei nur eine relativ geringe Anpresskraft aufgebracht werden muss. Das erste Glättzahnrad A treibt dann das Hohlrad 4 an, während sich das zweite und das dritte Glättzahnrad B, C an der Innenverzahnung 4a abrollen bzw. abwälzen. Aufgrund ihrer Pendelachsen b, c können die Glättzahnräder B, C der Innenverzahnung 4a optimal folgen.

Die drei Glättzahnräder A, B, C können bezüglich ihrer Verzahnungsmikrogeometrie unterschiedlich ausgeführt sein, um optimale Glättergebnisse in bestimmten Flankenbereichen zu erreichen. Derartige Geometrievariationen können in Zahnhöhenrichtung in Form von Profilwinkelkorrekturen (Eingriffswinkelkorrekturen, vorzugsweise im Bereich von ca. +/-0°30'), als Profilballigkeit (vorzugsweise im Bereich von -20 bis +30 µm) und in einer Kombination dieser Parameter ausgeführt werden. In Zahnbreitenrichtung können derartige Geometrievariationen als Flankenwinkelkorrekturen (vorzugsweise im Bereich von ca. +/-0°10'), als Breitenballigkeit (vorzugsweise im Bereich von -30 bis +50 µm) und in einer Kombination dieser Parameter ausgeführt werden. Zudem können Geometrievariationen in Zahnhöhenrichtung und in Zahnbreitenrichtung kombiniert bzw. überlagert werden.

Entsprechend sind in dem in Fig. 1 dargestellten Ausführungsbeispiel an den Verzahnungen der Glättzahnräder A, B, C unterschiedliche Profilkorrekturen vorgesehen: Das Zahnprofil des ersten Glättzahnrades A weist eine Höhenballigkeit auf; das Zahnprofil des zweiten Glättrades B weist eine vergleichsweise große Fußrücknahme auf, und das Zahnprofil des dritten Glättzahnrades C weist eine vergleichsweise große Kopfrücknahme auf. Die drei Glättzahnräder bearbeiten bzw. glätten daher unterschiedliche Bereiche oder Zonen der Innenverzahnung 4a, nämlich die Flankenmitte, den Zahnfuß und den Zahnkopf. Durch den Glättvorgang werden insbesondere Profilspitzen, die durch den Räumvorgang auf der Oberfläche der Innenverzahnung 4a entstanden sind, durch Verformung des noch "weichen" Materials eingeebnet, sodass eine verbesserte Oberflächengüte mit einem erhöhten Materialtraganteil geschaffen wird. Die Verzahnung des Hohlrades 4 kann nach dem Weichglätten gehärtet werden.

Dem Effekt der axialen Abdrift eines schrägverzahnten Hohlrades wird durch Anbringung eines die Axialbewegung des Hohlrades begrenzenden Stützrings an den ebenfalls schrägverzahnten Glättzahnrädern wirkungsvoll entgegengewirkt, was nachfolgend anhand von Fig. 1B näher erklärt wird. Eine weitere Möglichkeit, um diesem Effekt entgegenzuwirken und das Bearbeitungsergebnis zu verbessern, ist die alternierende Umkehrung der Drehrichtung des zu bearbeitenden Werkstücks während dem Glätten.

Fig.1B zeigt ein Detail des in Fig. 1 beschriebenen Ausführungsbeispiels einer erfindungsgemäßen Vorrichtung. In Fig. 1B dargestellt ist einen Querschnitt durch die zum Glätten einer Innen- und einer Außenverzahnung vorgesehene Vorrichtung 1. Das hier beispielhaft als Hohlrad 4 ausgeführte Werkstück liegt lose auf einer vorzugsweise gehärteten Auflage 5 und wird mit den Glättzahnrädern, von denen im gezeigten Querschnitt nur das Glättzahnrad A mit seiner Drehachse a sichtbar ist, in Eingriff gebracht, was durch den Pfeil P1 angedeutet ist. Die Drehachse des Hohlrades 4 ist mit d bezeichnet.

Bei einem schrägverzahnten Werkstück ergibt sich durch die radiale Anpresskraft F und das antreibende Moment M eine resultierende axiale Kraftkomponente, die das Werkstück je nach Drehrichtung auf die Auflage 5 drückt bzw. von der Auflage 5 abhebt. Ein Anlaufring 6, der vorzugsweise aus gehärtetem Stahl ausgeführt ist, ist fest mit dem Glättzahnrad A verbunden und begrenzt das mögliche Axialspiel 7 auf wenige Zehntelmillimeter. Vorzugsweise ist nur eines der Glättzahnräder angetrieben; in dem hier dargestellten Ausführungsbeispiel das Glättzahnrad A. Die sich aus dem vorzugsweise starr gelagerten antreibenden Glättzahnrad A ergebende Schrägstellung des Hohlrades 4 kann durch die pendelnde Lagerung der restlichen Glätträder ausgeglichen werden. Wie bereits erwähnt, ist für ein gleichmäßiges Bearbeitungsergebnis ein regelmäßiger Drehrichtungswechsel vorteilhaft, beispielsweise nach jeder 360°- Werkstückumdrehung.

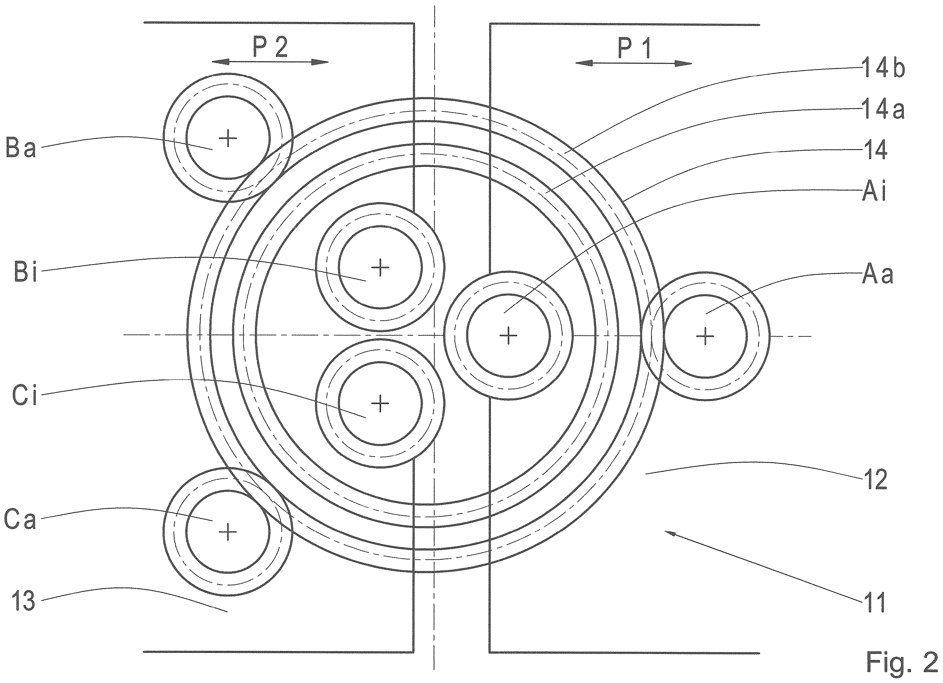

Fig. 2 zeigt ein zweites Ausführungsbeispiel der Erfindung, nämlich eine Vorrichtung 11 zum Glätten einer Innen- und einer Außenverzahnung, ebenfalls in schematischer Darstellung in einer Draufsicht. Für analoge Teile wurden die Bezugszahlen jeweils um 10 erhöht. Die Vorrichtung 11 umfasst einen ersten Schlitten 12, einen zweiten Schlitten 13, welche - analog dem Ausführungsbeispiel gemäß Fig. 1 - aufeinander zu oder voneinander weg bewegbar sind. Der erste Schlitten 12 weist ein angetriebenes Glättzahnrad Ai auf, und der zweite Schlitten 13 weist zwei pendelnd gelagerte Glättzahnräder Bi, Ci auf. Das Werkstück, welches auf der Vorrichtung 11 geglättet wird, ist ein als Hohl- und Sonnenrad ausgebildetes Bauteil 14, welches eine Innenverzahnung 14a sowie eine Außenverzahnung 14b aufweist. Die Innenverzahnung 14a ist vorzugsweise durch Drallräumen, d. h. spanabhebend hergestellt, während die Außenverzahnung 14b beispielsweise durch Fräsen, also ebenfalls spanabhebend hergestellt ist. Zum Glätten der Außenverzahnung 14b sind auf dem ersten Schlitten 12 ein antreibbares Glättzahnrad Aa und auf dem zweiten Schlitten 13 ein Glättzahnrad Ba, sowie ein drittes Glättzahnrad Ca drehbar angeordnet. Die Glättzahnräder Aa, Ba, Ca, im Folgenden auch Glätträder genannt, greifen mit ihren Außenverzahnungen in die Außenverzahnung 14b des Bauteiles 14 ein. Beim Glätten der Au ßenverzahnung 14b - wie in Fig. 2 dargestellt - werden die beiden Schlitten 12, 13 also aufeinander zu bewegt, um die erforderliche Anpresskraft für den Glättvorgang zu erzeugen. Anschließend werden die beiden Schlitten 12, 13 auseinander gefahren, sodass die äußeren Glättzahnräder Aa, Ba, Ca außer Eingriff und die inneren Glättzahnräder Ai, Bi, Ci in Eingriff mit der Innenverzahnung 14a kommen. Die inneren und äußeren Glättzahnräder Ai, Bi, Ci, Aa, Ba, Ca sind in analoger Weise profilkorrigiert wie beim Ausführungsbeispiel gemäß Fig.1.

Durch die unterschiedlichen Profilgeometrien der Glätträder werden unterschiedliche Bereiche oder Zonen der Zahnflanken des Werkstückes bearbeitet, woraus sich auch geringere Umformkräfte ergeben. Durch die erwähnten Profilkorrekturen treten die als Werkzeuge wirkenden Glättzahnräder nur in reduzierten Linienkontakt mit den Zahnflanken des Werkstückes. Dadurch wird eine möglichst hohe Flächenpressung und somit ein optimales Bearbeitungsergebnis über die gesamte Zahnflanke des Werkstückes sichergestellt. Wie bereits erwähnt, werden die Verzahnungen der Werkstücke im ungehärteten Zustand bearbeitet, d. h. unmittelbar nach dem Räumvorgang. Das Glättergebnis resultiert aus einer Überlagerung des Druckes und der Wälzgleitbewegung der Evolventenverzahnung. Dadurch werden Materialaufwürfe und Rauhigkeitsspitzen (Profilspitzen) eingeebnet und Verzahnungsbeschädigungen entfernt.

Die mit der erfindungsgemäßen Vorrichtung und dem erfindungsgemäßen Verfahren erzielte Oberflächengüte kann insbesondere durch zwei Oberflächenparameter oder Kennwerte gemäß DIN EN ISO 4287 charakterisiert werden, nämlich den Kennwert Rmr, der den Materialtraganteil des Profils beschreibt, und den Kennwert Rsk ("Schiefe"), welcher eine Oberfläche mit gutem Tragverhalten definiert, d. h. mit einem geringen Profilspitzenanteil. Die Oberfläche der Zahnflanken wies nach dem Weichglätten eine signifikante Verbesserung dieser beiden Kennwerte auf.

### Bezugszeichen

- 1: Vorrichtung
- 2: erster Schlitten
- 3: zweiter Schlitten
- 4: Hohlrad
- 4a: Innenverzahnung
- 5: Auflage
- 6: Anlaufring
- 7: Axialspiel

- 11: Vorrichtung
- 12: erster Schlitten
- 13: zweiter Schlitten
- 14: Sonnen-Hohlrad
- 14a: Innenverzahnung
- 14b: Außenverzahnung

- A: erstes Glättzahnrad
- B: zweites Glättzahnrad
- C: drittes Glättzahnrad
- a: Drehachse des ersten Glättzahnrads
- b: Drehachse des zweiten Glättzahnrads
- c: Drehachse des dritten Glättzahnrads
- d: Drehachse des Hohlrads

- Ai: inneres Glättzahnrad
- Bi: inneres Glättzahnrad
- Ci: inneres Glättzahnrad
- Aa: äußeres Glättzahnrad
- Ba: äußeres Glättzahnrad
- Ca: äußeres Glättzahnrad
- F: radial Anpresskraft
- M: Antriebsmoment

- P1: Bewegungsrichtung des ersten Schlittens
- P2: Bewegungsrichtung des zweiten Schlittens

## Patentansprüche

1. Vorrichtung zum Glätten einer Innen- und/oder einer Außenverzahnung (4a; 14a, 14b) eines Bauteiles (4; 14), wobei innerhalb der Innenverzahnung (4a; 14a) und/oder außerhalb der Außenverzahnung (14b) mindestens zwei in die Innenverzahnung (4a; 14a) und/oder die Außenverzahnung (14b) eingreifende, zustellbare Glättzahnräder (A, B, C; Ai, Bi, Ci, Aa, Ba, Ca) drehbar angeordnet sind, **dadurch gekennzeichnet, dass** das Bauteil (4; 14) beim Glätten nicht in der Vorrichtung fest eingespannt ist, sondern beim Glätten nur lose auf einer Auflage (5) aufliegt, und wobei zumindest eines der Glättzahnräder (A, B, C; Ai, Bi, Ci, Aa, Ba, Ca) einen Anlaufring (6) aufweist, der beim Glätten auftretende axiale Bewegungen des nicht fest eingespannten Bauteils (4; 14) begrenzt.

2. Vorrichtung nach Anspruch 1, **dadurch gekennzeichnet, dass** jedes der Glättzahnräder (A, B, C; Ai, Bi, Ci, Aa, Ba, Ca) einen Anlaufring (6) aufweist.

3. Vorrichtung nach Anspruch 1 oder 2, **dadurch gekennzeichnet, dass** drei jeweils um ca. 120° gegeneinander versetzt angeordnete Glättzahnräder (A, B, C; Ai, Bi, Ci, Aa, Ba, Ca) vorgesehen sind.

4. Vorrichtung nach Anspruch 1, 2 oder 3, **dadurch gekennzeichnet, dass** mindestens ein Glättzahnrad (A, B, C, Ai, Bi, Ci, Aa, Ba, Ca) auf einem beweglichen Schlitten (2, 3, 12, 13) angeordnet ist.

5. Vorrichtung nach Anspruch 4, **dadurch gekennzeichnet, dass** ein erstes Glättzahnrad (A; Ai, Aa) auf einem ersten Schlitten (2, 12) und ein zweites sowie ein drittes Glättzahnrad (B; Bi, Ba; C; Ci, Ca) auf einem zweiten Schlitten (3, 13) angeordnet sind, wobei die Schlitten (2, 3, 12, 13) diametral gegeneinander verschiebbar sind.

6. Vorrichtung nach Anspruch 5, **dadurch gekennzeichnet, dass** das zweite und das dritte Glättzahnrad (B, C; Bi, Ci, Ba, Ca) drehbar und pendelnd gegenüber dem zweiten Schlitten (3,13) gelagert sind.

7. Vorrichtung nach Anspruch 5 oder 6, **dadurch gekennzeichnet, dass** das erste Glättzahnrad (A; Ai, Aa) drehbar gegenüber dem ersten Schlitten (2, 12) gelagert und in Drehrichtung antreibbar ist.

8. Vorrichtung nach einem der Ansprüche 1 bis 7, **dadurch gekennzeichnet, dass** die Verzahnungen der Glättzahnräder (A, B, C; Ai, Bi, Ci, Aa, Ba, Ca) jeweils unterschiedliche Zahnprofile aufweisen.

9. Vorrichtung nach Anspruch 8, **dadurch gekennzeichnet, dass** an einem der Glätträder (A, B, C) an dessen Zahnprofilen in Zahnhöhenrichtung gesehen eine Profilwinkelkorrektur im Bereich von plus/minus 0 Grad 30 Minuten und/oder eine Profilballigkeit im Bereich von minus 20 µm bis plus 30 µm vorgesehen ist.

10. Vorrichtung nach Anspruch 8 oder 9, **dadurch gekennzeichnet, dass** an einem der Glätträder (A, B, C) an dessen Zahnprofilen in Zahnbreitenrichtung gesehen eine Flankenwinkelkorrektur im Bereich von plus/minus 0 Grad 10 Minuten und/oder eine Breitenballigkeit im Bereich von minus 30 µm bis plus 50 µm vorgesehen ist.

11. Vorrichtung nach einem der Ansprüche 8 bis 10, **dadurch gekennzeichnet, dass** die Zahnflanken des ersten Glättzahnrades (A; Ai, Aa) eine Höhenballigkeit aufweisen.

12. Vorrichtung nach einem der Ansprüche 8 bis 11, **dadurch gekennzeichnet, dass** das Zahnprofil des zweiten Glättzahnrades (B; Bi, Ba) eine Fußrücknahme aufweist.

13. Vorrichtung nach einem der Ansprüche 8 bis 12, **dadurch gekennzeichnet, dass** das Zahnprofil des dritten Glättzahnrades (C; Ci, Ca) eine Kopfrücknahme aufweist.

14. Vorrichtung nach einem der Ansprüche 1 bis 13, **dadurch gekennzeichnet, dass** die Vorrichtung (1) zum Glätten einer Innenverzahnung (4a) eines als Hohlrad (4) ausgebildeten Bauteils oder zum Glätten einer Innenverzahnung (14a) und einer Außenverzahnung (14b) eines als Sonnen-Hohlrads (14) ausgebildeten Bauteils ausgebildet ist.

15. Verfahren zur Herstellung einer Innen- und/oder Außenverzahnung an einem Bauteil (4, 14), wobei die Innen- und/oder die Außenverzahnung (4a; 14a, 14b) in einem ersten Verfahrensschritt durch ein spanabhebendes Verfahren vorgefertigt wird und **dadurch gekennzeichnet dass** in einem zweiten unmittelbar an den ersten anschließenden Verfahrensschritt die Innen- und/ oder die Außenverzahnung (4a; 14a, 14b) durch Weichglätten bearbeitet wird,
wobei das Weichglätten mit einer Vorrichtung nach einem der Ansprüche 1 bis 14 erfolgt.

16. Verfahren nach Anspruch 15, **dadurch gekennzeichnet, dass** der Vorgang des Weichglättens gleichzeitig in unterschiedlichen, aneinander angrenzenden Zonen des Zahnprofils des Bauteiles (4, 14) erfolgt.

17. Verfahren nach Anspruch 16, **dadurch gekennzeichnet, dass** als erste Zone die Zahnflankenmitte geglättet wird.

18. Verfahren nach Anspruch 16 oder 17, **dadurch gekennzeichnet, dass** als zweite Zone der Zahnkopfbereich geglättet wird.

19. Verfahren nach Anspruch 16, 17 oder 18, **dadurch gekennzeichnet, dass** als dritte Zone der Zahnfußbereich geglättet wird.

## Claims

1. Device for smoothing an internal and/or external toothing (4a; 14a, 14b) of a component (4; 14), wherein, inside the internal toothing (4a; 14a) and/or outside the external toothing (14b), at least two feedable smoothing gearwheels (A, B, C; Ai, Bi, Ci, Aa, Ba, Ca) that engage in the internal toothing (4a; 14a) and/or the external toothing (14b) are arranged in a rotatable manner,
**characterized in that**
the component (4; 14) is not clamped firmly in place in the device during smoothing but rather only rests loosely on a support (5) during smoothing,
and wherein at least one of the smoothing gearwheels (A, B, C; Ai, Bi, Ci, Aa, Ba, Ca) has a thrust ring (6), which limits axial movements, arising during smoothing, of the component (4; 14) that is not clamped firmly in place.

2. Device according to Claim 1, **characterized in that** each of the smoothing gearwheels (A, B, C; Ai, Bi, Ci, Aa, Ba, Ca) has a thrust ring (6).

3. Device according to Claim 1 or 2, **characterized in that** three smoothing gearwheels (A, B, C; Ai, Bi, Ci, Aa, Ba, Ca) that are arranged in manner offset with respect to one another in each case by about 120° are provided.

4. Device according to Claim 1, 2 or 3, **characterized in that** at least one smoothing gearwheel (A, B, C; Ai, Bi, Ci, Aa, Ba, Ca) is arranged on a movable carriage (2, 3, 12, 13) .

5. Device according to Claim 4, **characterized in that** a first smoothing gearwheel (A; Ai, Aa) is arranged on a first carriage (2, 12) and a second and a third smoothing gearwheel (B; Bi, Ba; C; Ci, Ca) are arranged on a second carriage (3, 13), wherein the carriages (2, 3, 12, 13) are displaceable diametrically with respect to one another.

6. Device according to Claim 5, **characterized in that** the second and the third smoothing gearwheel (B, C; Bi, Ci, Ba, Ca) are mounted in a rotatable and reciprocating manner with respect to the second carriage (3, 13).

7. Device according to Claim 5 or 6, **characterized in that** the first smoothing gearwheel (A; Ai, Aa) is mounted in a rotatable manner with respect to the first carriage (2, 12) and is drivable in a direction of rotation.

8. Device according to one of Claims 1 to 7, **characterized in that** the toothings of the smoothing gearwheels (A, B, C; Ai, Bi, Ci, Aa, Ba, Ca) each have different tooth profiles.

9. Device according to Claim 8, **characterized in that** a profile angle correction in the region of plus/minus 0 degrees 30 minutes and/or a profile crowning in the range of minus 20 µm to plus 30 µm is provided on one of the smoothing wheels (A, B, C) on the tooth profiles thereof as seen in the tooth height direction.

10. Device according to Claim 8 or 9, **characterized in that** a flank angle correction in the region of plus/minus 0 degrees 10 minutes and/or a width crowning in the range of minus 30 µm to plus 50 µm is provided on one of the smoothing wheels (A, B, C) on the tooth profiles thereof as seen in the tooth width direction.

11. Device according to one of Claims 8 to 10, **characterized in that** the tooth flanks of the first smoothing gearwheel (A; Ai, Aa) have a height crowning.

12. Device according to one of Claims 8 to 11, **characterized in that** the tooth profile of the second smoothing gearwheel (B; Bi, Ba) has a root relief.

13. Device according to one of Claims 8 to 12, **characterized in that** the tooth profile of the third smoothing gearwheel (C; Ci, Ca) has a tip relief.

14. Device according to one of Claims 1 to 13, **characterized in that** the device (1) is configured to smooth an internal toothing (4a) of a component configured as a ring gear (4) or to smooth an internal toothing (14a) and an external toothing (14b) of a component configured as a sun ring gear (14).

15. Method for producing an internal and/or external toothing on a component (4, 14), wherein the internal and/or external toothing (4a; 14a, 14b) is preformed in a first method step by a machining method, and **characterized in that**, in a second method step immediately following the first method step, the internal and/or external toothing (4a; 14a, 14b) are processed by soft smoothing, wherein the soft smoothing is carried out using a device according to one of Claims 1 to 14.

16. Method according to Claim 15, **characterized in that** the operation of soft smoothing takes place simultaneously in different, mutually adjoining zones of the tooth profile of the component (4, 14).

17. Method according to Claim 16, **characterized in that** the tooth flank middle is smoothed as the first zone.

18. Method according to Claim 16 or 17, **characterized in that** the tooth tip region is smoothed as the second zone.

19. Method according to Claim 16, 17 or 18, **characterized in that** the tooth root region is smoothed as the third zone.

## Revendications

1. Dispositif permettant de lisser une denture intérieure et/ou extérieure (4a; 14a, 14b) d'une pièce (4; 14), dans lequel au moins deux roues dentées de lissage (A, B, C; Ai, Bi, Ci, Aa, Ba, Ca) ajustables, qui s'engagent dans la denture intérieure (4a; 14a) et/ou dans la denture extérieure (14b), sont disposées de façon rotative à l'intérieur de la denture intérieure (4a; 14a) et/ou à l'extérieur de la denture extérieure (14b), **caractérisé en ce que** la pièce (4, 14) n'est pas serrée à bloc dans le dispositif lors du lissage, mais elle est uniquement posée librement sur un support lors du lissage et dans lequel au moins une des roues dentées de lissage (A, B, C; Ai, Bi, Ci, Aa, Ba, Ca) présente un anneau d'approche (6), qui limite des mouvements axiaux de la pièce non serrée à bloc (4; 14) qui se produisent lors du lissage.

2. Dispositif selon la revendication 1, **caractérisé en ce que** chacune des roues dentées de lissage (A, B, C; Ai, Bi, Ci, Aa, Ba, Ca) présente un anneau d'approche (6).

3. Dispositif selon la revendication 1 ou 2, **caractérisé en ce qu'**il est prévu trois roues dentées de lissage (A, B, C; Ai, Bi, Ci, Aa, Ba, Ca) respectivement décalées l'une de l'autre d'environ 120°.

4. Dispositif selon une revendication 1, 2 ou 3, **caractérisé en ce qu'**au moins une roue dentée de lissage (A, B, C; Ai, Bi, Ci, Aa, Ba, Ca) est disposée sur un chariot mobile (2, 3, 12, 13).

5. Dispositif selon la revendication 4, **caractérisé en ce qu'**une première roue dentée de lissage (A; Ai, Aa) est disposée sur un premier chariot (2, 12) et une deuxième ainsi qu'une troisième roues dentées de lissage (B; Bi, Ba; C; Ci, Ca) sont disposées sur un deuxième chariot (3, 13), dans lequel les chariots (2, 3, 12, 13) sont déplaçables diamétralement l'un par rapport à l'autre.

6. Dispositif selon la revendication 5, **caractérisé en ce que** la deuxième et la troisième roues dentées de lissage (B, C; Bi, Ci, Ba, Ca) sont montées de façon rotative et pendulaire par rapport au deuxième chariot (3, 13).

7. Dispositif selon une revendication 5 ou 6, **caractérisé en ce que** la première roue dentée de lissage (A; Ai, Aa) est montée de façon rotative par rapport au premier chariot (2, 12) et peut être entraînée dans la direction de rotation.

8. Dispositif selon l'une quelconque des revendications 1 à 7, **caractérisé en ce que** les dentures des roues dentées de lissage (A, B, C; Ai, Bi, Ci, Aa, Ba, Ca) présentent chacune des profils de dents différents.

9. Dispositif selon la revendication 8, **caractérisé en ce qu'**il est prévu sur une des roues de lissage (A, B, C) sur ses profils de dents vus dans la direction de la hauteur des dents, une correction d'angle de profil dans la plage de ± 0 degré 30 minutes et/ou une cambrure de profil dans la plage de moins 20 µm à plus 30 µm.

10. Dispositif selon une revendication 8 ou 9, **caractérisé en ce qu'**il est prévu sur une des roues de lissage (A, B, C) sur ses profils de dents vus dans la direction de la largeur des dents une correction d'angle de flanc dans la plage de ± 0 degré 10 minutes et/ou une cambrure en largeur dans la plage de moins 30 µm à plus 50 µm.

11. Dispositif selon l'une quelconque des revendications 8 à 10, **caractérisé en ce que** les flancs de dents de la première roue dentée de lissage (A; Ai, Aa) présentent une cambrure en hauteur.

12. Dispositif selon l'une quelconque des revendications 8 à 11, **caractérisé en ce que** le profil des dents de la deuxième roue dentée de lissage (B; Bi, Ba) présente un retrait du pied.

13. Dispositif selon l'une quelconque des revendications 8 à 12, **caractérisé en ce que** le profil des dents de la troisième roue dentée de lissage (C; Ci, Ca) présente un retrait de la tête.

14. Dispositif selon l'une quelconque des revendications 1 à 13, **caractérisé en ce que** le dispositif (1) est configuré pour le lissage d'une denture intérieure (4a) d'une pièce réalisée en forme de roue creuse (4) ou pour le lissage d'une denture intérieure (14a) et d'une denture extérieure (14b) d'une pièce réalisée en forme de couronne solaire (14).

15. Procédé de fabrication d'une denture intérieure et/ou extérieure sur une pièce (4, 14), dans lequel on préfabrique la denture intérieure et/ou extérieure (4a; 14a, 14b) dans une première étape du procédé par un procédé avec enlèvement de copeaux, et **caractérisé en ce que** dans une deuxième étape du procédé suivant immédiatement la première étape du procédé on traite la denture intérieure et/ou extérieure (4a; 14a, 14b) par lissage doux, dans lequel le lissage doux est effectué avec un dispositif selon l'une quelconque des revendications 1 à 14.

16. Procédé selon la revendication 15, **caractérisé en ce que** l'opération de lissage doux est effectuée simultanément dans différentes zones adjacentes du profil des dents de la pièce (4, 14).

17. Procédé selon la revendication 16, **caractérisé en ce que** l'on lisse le milieu du flanc des dents comme première zone.

18. Procédé selon une revendication 16 ou 17, **caractérisé en ce que** l'on lisse la région de la tête des dents comme deuxième zone.

19. Procédé selon une revendication 16, 17 ou 18, **caractérisé en ce que** l'on lisse la région du pied des dents comme troisième zone.
